(19) Europäisches Patentamt / European Patent Office / Office européen des brevets

(11) **EP 4 247 116 B1**

(12) **EUROPEAN PATENT SPECIFICATION**

(45) Date of publication and mention
of the grant of the patent:
**25.02.2026 Bulletin 2026/09**

(21) Application number: **21891782.1**

(22) Date of filing: **05.11.2021**

(51) International Patent Classification (IPC):
*H05B 3/26* (2006.01)     *H05B 3/03* (2006.01)
*H05B 3/10* (2006.01)

(52) Cooperative Patent Classification (CPC):
**H05B 3/267;** H05B 2203/011; H05B 2203/013;
H05B 2203/014; H05B 2214/04; Y02B 30/00

(86) International application number:
**PCT/JP2021/040793**

(87) International publication number:
**WO 2022/102536 (19.05.2022 Gazette 2022/20)**

(54) **WIRING SHEET AND SHEET-FORM HEATER**

VERDRAHTUNGSPLATTE UND BLATTFÖRMIGES HEIZELEMENT

FEUILLE DE CÂBLAGE ET ÉLÉMENT CHAUFFANT EN FORME DE FEUILLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.11.2020 JP 2020187899**

(43) Date of publication of application:
**20.09.2023 Bulletin 2023/38**

(73) Proprietor: **LINTEC CORPORATION**
**Itabashi-ku**
**Tokyo 173-0001 (JP)**

(72) Inventors:
  • **ONISHI, Go**
    **Tokyo 173-0001 (JP)**

  • **OSHIMA, Takuya**
    **Tokyo 173-0001 (JP)**
  • **MIYAZAWA, Yasunao**
    **Tokyo 173-0001 (JP)**

(74) Representative: **Gille Hrabal**
**Partnerschaftsgesellschaft mbB**
**Patentanwälte**
**Brucknerstraße 20**
**40593 Düsseldorf (DE)**

(56) References cited:
  **EP-A1- 3 378 640          GB-A- 2 061 680**
  **JP-A- 2004 303 683      JP-A- 2020 119 856**
  **JP-A- 2020 119 856      JP-A- H06 163 145**
  **JP-A- H07 192 857        JP-U- S59 187 087**
  **JP-U- S62 197 288        JP-U- S62 197 288**
  **US-A- 6 084 219**

**Description**

TECHNICAL FIELD

The present invention relates to a wiring sheet and a sheet-shaped heater.

BACKGROUND ART

A sheet-shaped conductive member (hereinafter also referred to as a "conductive sheet"), which includes a pseudo sheet structure in which a plurality of conductive linear bodies are arranged at intervals, may be used as a component of various articles (e.g., a heat-generating body of a heater, a material of heat-generating textiles, and a protection film (anti-shattering film) for a display device).

Patent Literature 1 or 2 discloses an example of a sheet usable for a heat-generating body in a form of a conductive sheet including a pseudo sheet structure having a plurality of linear bodies arranged at intervals to extend unidirectionally. A pair of electrodes is provided at respective ends of the plurality of linear bodies to provide a wiring sheet usable as a heat-generating body.

Patent Literature 3 discloses an electrically heatable panel comprising a substrate bearing deposits of electrically conductive material, which form bus strips along the opposed side margins of the panel and electrical resistance heating elements extending between the bus strips in a generally ladder-like array.

CITATION LIST

PATENT LITERATURE(S)

  Patent Literature 1: WO 2017/086395 A
  Patent Literature 2: EP 3 378 640 A1
  Patent Literature 3: GB 2 061 680 A

SUMMARY OF THE INVENTION

PROBLEM(S) TO BE SOLVED BY THE INVENTION

The electrodes used for the wiring sheet are typically provided by metallic foil or silver paste. However, in view of flexibility of electrode portions of the wiring sheet, the use of a metal wire or the like in place of the metallic foil or silver paste has been studied. On the other hand, when thin electrodes such as a metal wire are used as electrodes, a resistance value of the electrodes is relatively large. Thus, a difference in resistance value between each electrode and each linear body as a heat-generating portion is small, so that the resistance value of the electrode, which is normally supposed to be negligible, cannot be ignored. As a result, it is found that temperature variation may occur when electric current is applied to the wiring sheet for heat generation.

An object of the invention is to provide a wiring sheet and a sheet-shaped heater capable of restraining temperature variation.

MEANS FOR SOLVING THE PROBLEM(S)

A wiring sheet according to an aspect of the invention includes: a pseudo sheet structure including a plurality of conductive linear bodies arranged at intervals; a pair of electrodes; and a first power feeder provided for one of the electrodes and a second power feeder provided for the other of the electrodes, in which provided that the number of the conductive linear bodies is N, a resistance value of each of the conductive linear bodies is r, a resistance value of each of the electrodes is R, a resistance value of each of the electrodes between an n-th conductive linear body and an (n-1)th conductive linear body counted from a side at which the first power feeder and the second power feeder are provided is $R_n$, the wiring sheet satisfies all conditions represented by numerical formulae (F1), (F2) and (F3) below.

$$r/R \leq 300 \qquad (F1)$$

$$R_n \le R_{n-1} \qquad (F2)$$

In the numerical formula (F2), n is an integer of 2 or more.

$$0 < R_2 - R_N \qquad (F3)$$

where N is an integer of 3 or more.

In the wiring sheet according to the above aspect of the invention, an interval between the conductive linear bodies is preferably 20 mm or less.

It is preferable that the wiring sheet according to the above aspect of the invention further includes a base material supporting the pseudo sheet structure.

A sheet-shaped heater according to another aspect of the invention includes the wiring sheet according to the above aspect of the invention.

According to the above aspects of the invention, a wiring sheet and a sheet-shaped heater capable of restraining temperature variation can be provided.

BRIEF DESCRIPTION OF DRAWING(S)

Fig. 1 schematically shows a wiring sheet according to a first exemplary embodiment of the invention.
Fig. 2 is a cross-sectional view taken along a line II-II in Fig. 1.
Fig. 3 schematically shows a wiring sheet according to a second exemplary embodiment of the invention.
Fig. 4 is a graph showing a relationship between power consumption and a number of a conductive linear body in analysis of power consumption distribution.

DESCRIPTION OF EMBODIMENT(S)

First Exemplary Embodiment

Exemplary embodiment(s) of the invention will be described below with reference to the attached drawings. The scope of the invention is not limited to the disclosures of the exemplary embodiment(s). It should be noted that some parts of the drawings are enlarged or reduced in size for the convenience of description.

Wiring Sheet

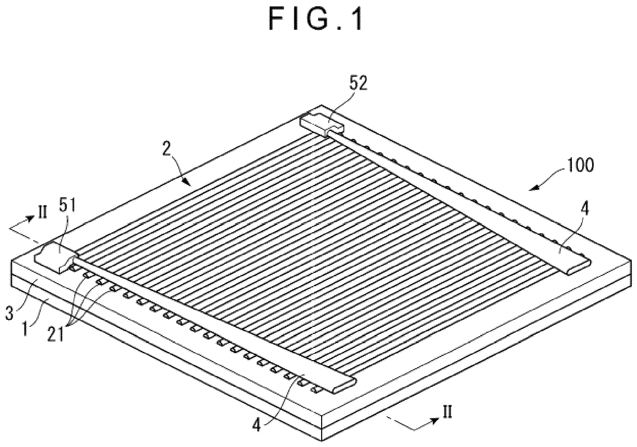

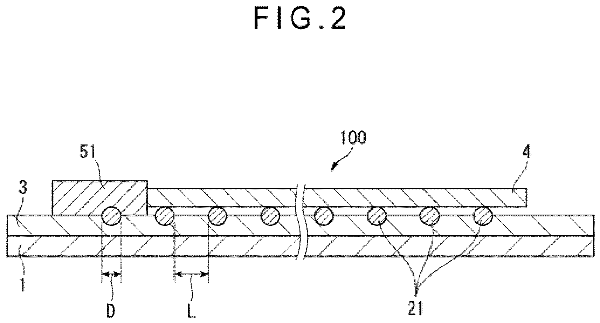

As shown in Figs. 1 and 2, a wiring sheet 100 according to an exemplary embodiment includes a base material 1, a pseudo sheet structure 2, a resin layer 3, and a pair of electrodes 4. Specifically, in the wiring sheet 100, the base material 1, the resin layer 3 and the pseudo sheet structure 2 are laminated in this order. The pseudo sheet structure 2 includes a plurality of conductive linear bodies 21 arranged at intervals. A first power feeder 51 is provided on one of the electrodes 4, and a second power feeder 52 is provided on the other of the electrodes 4.

In the exemplary embodiment, provided that the number of conductive linear bodies 21 is N, a resistance value of each conductive linear body 21 is r $[\Omega]$, a resistance value of each electrode 4 is R $[\Omega]$, a resistance value of the electrode 4 between the n-th conductive linear body 21 and the (n-1)th conductive linear body 21 counted from a side at which the first power feeder 51 and the second power feeder 52 are provided is $R_n$ $[\Omega]$, the wiring sheet needs to satisfy all conditions represented by numerical formulae (F1), (F2) and (F3) described below.

Herein, the wording "the n-th conductive linear body 21 counted from a side at which the first power feeder 51 and the second power feeder 52 are provided" refers to one of the conductive linear bodies 21, which is electrically connected to the pair of electrodes 4 and provided at the n-th location counted from the first power feeder 51 and the second power feeder 52 along the wiring pattern of the wiring sheet 100.

In the exemplary embodiment, it is necessary that the condition represented by the numerical formula (F1) should be satisfied.

$$r/R \le 300 \qquad (F1)$$

At a value of r/R exceeding 300, the resistance value of the conductive linear body 21 as a heat-generating portion is sufficiently larger than the resistance value of the electrode 4. Thus, the resistance value of the electrode 4 is mostly negligible in the wiring sheet 100, and the problem of temperature variation is not likely to occur.

In contrast, the problem of temperature variation is more likely to occur as the value r/R is smaller, where use of the wiring sheet 100 according to the exemplary embodiment is highly significant.

The value r/R may be 200 or less, or 100 or less. However, an excessively small value of r/R causes heat generation also in the electrodes 4. The value r/R is thus preferably 10 or more.

In the exemplary embodiment, it is necessary that the condition represented by the numerical formula (F2) should be satisfied.

$$R_n \leq R_{n-1} \qquad \text{(F2)}$$

When the condition represented by the numerical formula (F2) is not satisfied, temperature variation cannot be restrained.

In the numerical formula (F2), n is an integer of 2 or more. An upper limit of n is the number N of the conductive linear bodies 21.

The number N of the conductive linear bodies 21 is 3 or more more preferably 5 or more, and still more preferably 10 or more. The temperature variation is more likely to occur as the number of the conductive linear bodies 21 increases. However, the temperature variation can be restrained by the wiring sheet 100 according to the exemplary embodiment even when the number of the conductive linear bodies 21 is large. An upper limit of the number N of the conductive linear bodies 21, which is not specifically limited, is, for instance, 150.

In the exemplary embodiment, it is necessary that the condition represented by the numerical formula (F3) should be satisfied.

$$0 < R_2 - R_N \qquad \text{(F3)}$$

When the condition represented by the numerical formula (F3) is not satisfied, the temperature variation cannot be restrained.

In addition, in order to further restrain the temperature variation, a value $R_2 - R_N$ is preferably R/4N or more, more preferably R/2N or more, and still more preferably R/N or more. It should be noted that the value $R_2 - R_N$ does not exceed the value R, which is the resistance value of the electrode 4.

The inventors of the invention presume that the reason why the temperature variation is restrained when all of the conditions represented by the numerical formulae (F1), (F2), and (F3) are satisfied, is as follows.

Specifically, when the condition represented by the numerical formula (F1) is satisfied, a difference between the resistance value of the conductive linear body 21, which is a heat-generating portion, and the resistance value of the electrode 4 is small. In this case, the resistance value of the electrode 4, which is normally supposed to be negligible, cannot be ignored. That is, the temperature variation may occur when electric current is applied to the wiring sheet 100 for heat generation. This is because the conductive linear bodies 21 distal to the first power feeder 51 and the second power feeder 52 are greatly affected by the resistance of the electrode 4 to the distal conductive linear bodies 21. The inventors of the invention presume that, when electric current is applied to the wiring sheet 100 for heat generation, the electric current flowing in the distal conductive linear bodies 21 is relatively small, and consequently, the temperature of the distal conductive linear bodies 21 is lower than that of other conductive linear bodies 21.

Meanwhile, when the conditions represented by the numerical formulae (F2) and (F3) are satisfied, the resistance value $R_n$ of the electrode 4 between the n-th conductive linear body 21 and the (n-1)th conductive linear body 21 decreases with increased distance from the first power feeder 51 and the second power feeder 52. The conductive linear bodies 21 distal to the first power feeder 51 and the second power feeder 52 are greatly affected by the resistance of the electrode 4 from the power feeders to the distal conductive linear bodies 21. However, this effect can be inhibited by the decrease in the resistance value $R_n$ of the electrode 4. The inventors presume that the temperature variation is restrained as described above.

The resistance values of the conductive linear body 21 and the electrode 4 can be set by any known method as appropriate, for instance, can be adjusted by changing the material, cross-sectional area, and/or length.

For instance, a cross-sectional area of the electrode 4 may increase with increased distance from each of the first power feeder 51 and the second power feeder 52, as shown in Fig. 1. In this configuration, the resistance value of the electrode 4 can decrease with increased distance from each of the first power feeder 51 and the second power feeder 52. Further, the electrode may be formed using materials in such a manner that a material exhibiting higher electrical conductivity is used as a portion of the electrode, where the material is used, is more distanced from each of the first power feeder 51 and the second power feeder 52.

Base Material

Examples of the base material 1 include a synthetic resin film, paper, metallic foil, nonwoven fabric, fabric, and glass film. The base material 1 can directly or indirectly support the pseudo sheet structure 2. The base material 1 is preferably a flexible base material.

Examples of the usable flexible base material include a synthetic resin film, paper, nonwoven fabric, and fabric. The flexible base material is preferably a synthetic resin film, nonwoven fabric, or fabric, more preferably a nonwoven fabric or fabric.

Examples of the synthetic resin film include a polyethylene film, polypropylene film, polybutene film, polybutadiene film, polymethylpentene film, polyvinyl chloride film, vinyl chloride copolymer film, polyethylene terephthalate film, polyethylene naphthalate film, polybutylene terephthalate film, polyurethane film, ethylene vinyl acetate copolymer film, ionomer resin film, ethylene-(meth)acrylate copolymer film, ethylene-(meth)acrylate ester copolymer film, polystyrene film, polycarbonate film, and polyimide film. Other examples of the flexible base material include cross-linked films and laminate films of the above materials.

Examples of the paper include high-quality paper, recycled paper, and craft paper. Examples of the nonwoven fabric include spun-bond nonwoven fabric, needlepunched nonwoven fabric, melt-blown nonwoven fabric, and spunlace nonwoven fabric. Examples of the fabric include woven fabric and knit fabric. It should be noted that the paper, nonwoven fabric, and fabric for the flexible base material are not limited to these examples.

Pseudo Sheet Structure

The pseudo sheet structure 2 is configured by the plurality of conductive linear bodies 21 arranged at intervals. The conductive linear bodies 21 are linearshaped in a plan view of the wiring sheet 100. The pseudo sheet structure 2 is configured by arraying the plurality of conductive linear bodies 21 in a direction intersecting an axial direction of the conductive linear bodies 21.

The conductive linear bodies 21 may be wave-shaped in a plan view of the wiring sheet 100. Specific examples of the wave-shaped conductive linear bodies 21 include sine-wave, circular wave, rectangular wave, triangular wave, and saw-tooth wave conductive linear bodies 21. The pseudo sheet structure 2 with such an arrangement can restrain breakage of the conductive linear bodies 21 when the wiring sheet 100 is stretched in the axial direction of the conductive linear bodies 21.

A volume resistivity of the conductive linear body 21 is preferably in a range from $1.0 \times 10^{-9}\ \Omega\cdot m$ to $1.0 \times 10^{-3}\ \Omega\cdot m$, more preferably in a range from $1.0 \times 10^{-8}\ \Omega\cdot m$ to $1.0 \times 10^{-4}\ \Omega\cdot m$. Surface resistance of the pseudo sheet structure 2 is easily lowered when the volume resistivity of the conductive linear body 21 is within the above range.

The volume resistivity of the conductive linear body 21 is measured as follows. A silver paste is applied to both ends of the conductive linear bodies 21 and a resistance of a portion at a length of 40 mm from each end is measured to calculate a resistance value of the conductive linear body 21. Then, a value, which is obtained by multiplying the cross-sectional area (unit: $m^2$) of the conductive linear body 21 by the above resistance value, is divided by the above measured length (0.04 m) to calculate the volume resistivity of the conductive linear body 21.

The cross-sectional shape of the conductive linear body 21, which is not specifically limited, may be polygonal, flattened, elliptical, or circular. An elliptical shape or a circular shape is preferable in view of compatibility with the resin layer 3.

When the cross section of the conductive linear body 21 is circular, a thickness (diameter) D of the conductive linear body 21 (see Fig. 2) is preferably in a range from 5 $\mu$m to 75 $\mu$m. In order to restrain an increase in sheet resistance and improve heat generation efficiency and anti-insulation/breakdown properties when the wiring sheet 100 is used as a heat-generating body, the diameter D of the conductive linear body 22 is more preferably in a range from 8 $\mu$m to 60 $\mu$m, and still more preferably in a range from 12 $\mu$m to 40 $\mu$m.

When the cross section of the conductive linear body 21 is elliptical, it is preferable that the major axis thereof is in the same range as the diameter D described above.

The diameter D of the conductive linear body 21 is an average of diameters measured at randomly selected five points of the conductive linear bodies 21 of the pseudo sheet structure 2 through an observation using a digital microscope.

An interval L between the conductive linear bodies 21 (see Fig. 2) is preferably 20 mm or less, more preferably in a range from 0.5 mm to 15 mm, and still more preferably in a range from 1 mm to 10 mm.

When the interval between the conductive linear bodies 21 falls within the above range, the conductive linear bodies are densely arrayed to some extent. This can enhance the performance of the wiring sheet 100 such as keeping the resistance of the pseudo sheet structure at a low level and providing uniform distribution in temperature rise when the wiring sheet 100 is used as a heat-generating body.

The interval L between the conductive linear bodies 21 is obtained by observing the conductive linear bodies 21 of the pseudo sheet structure 2 and measuring an interval between adjacent two of the conductive linear bodies 21 visually or using a digital microscope.

It should be noted that the interval between adjacent two of the conductive linear bodies 21 herein refers to a length between facing parts of the two conductive linear bodies 21 in an arraying direction of the conductive linear bodies 21 (see Fig. 2). When the conductive linear bodies 21 are arrayed at uneven intervals, the interval L is an average of all intervals between adjacent ones of the conductive linear bodies 21.

The conductive linear body 21, of which structure is not specifically limited, may be a linear body including a metal wire (hereinafter also referred to as a "metal wire linear body"). The metal wire is excellent in heat conductivity, electrical conductivity, handleability, and versatility. The use of the metal wire linear body as the conductive linear body 21 facilitates the improvement in light transmissivity while reducing the resistance value of the pseudo sheet structure 2. Further, when the wiring sheet 100 (pseudo sheet structure 2) is used as a heat-generating body, heat is easily and quickly generated. Furthermore, a small-diameter linear body as described above is easily obtainable.

It should be noted that examples of the conductive linear body 21 include, in addition to the metal wire linear body, a linear body including a carbon nanotube and a linear body in a form of a conductively coated yarn.

The metal wire linear body may be a linear body made of a single metal wire or a linear body provided by spinning a plurality of metal wires.

Examples of the metal wire include wires containing metals, such as copper, aluminum, tungsten, iron, molybdenum, nickel, titanium, silver, and gold, or alloys containing two or more metals (e.g., steels such as stainless steel and carbon steel, brass, phosphor bronze, zirconium-copper alloy, beryllium copper, iron nickel, Nichrome®, nickel titanium, KANTHAL®, HASTELLOY®, and rhenium tungsten). The metal wire may be plated with tin, zinc, silver, nickel, chromium, nickel-chromium alloy, solder or the like, or surface-coated with a later-described carbon material or a polymer. Especially, a wire containing one or more metals selected from tungsten, molybdenum and alloys containing tungsten and/or molybdenum is preferable in terms of providing the conductive linear bodies 21 with a low volume resistivity.

The metal wire may be coated with a carbon material. Coating the metal wire with a carbon material reduces metallic luster, making it easy for the metal wire to be less noticeable. Further, the metal wire coated with a carbon material is restrained from metal corrosion.

Examples of the carbon material usable for coating the metal wire include amorphous carbon (e.g., carbon black, active carbon, hard carbon, soft carbon, mesoporous carbon, and carbon fiber), graphite, fullerene, graphene, and a carbon nanotube.

The linear body including a carbon nanotube is obtained by, for instance, drawing, from an end of a carbon nanotube forest (which is a grown form provided by causing a plurality of carbon nanotubes to grow on a substrate, being oriented in a vertical direction relative to the substrate, and is also referred to as "array"), the carbon nanotubes into a sheet form, and spinning a bundle of the carbon nanotubes after drawn carbon nanotube sheets are bundled. When the carbon nanotubes are not spun, a ribbon-shaped carbon nanotube linear body is obtained. When the carbon nanotubes are spun, a yarn-shaped linear body is obtained. The ribbon-shaped carbon nanotube linear body is a linear body without a structure in which the carbon nanotubes are twisted. Alternatively, the carbon nanotube linear body can be obtained by performing, for instance, spinning from a dispersion liquid of carbon nanotubes. The production of the carbon nanotube linear body by spinning can be performed by, for instance, a method disclosed in U.S. Patent Application Publication No. 2013/0251619 (JP 2012-126635 A). The use of the yarn-shaped carbon nanotube linear body is preferable in order to obtain carbon nanotube linear bodies having a uniform diameter. The yarn-shaped carbon nanotube linear body is preferably produced by spinning the carbon nanotube sheets in order to obtain carbon nanotube linear bodies with high purity. The carbon nanotube linear body may be a linear body provided by knitting two or more carbon nanotube linear bodies. Alternatively, the carbon nanotube linear body may be a linear body provided by combining a carbon nanotube and another conductive material (hereinafter also referred to as "composite linear body").

Examples of the composite linear body include: (1) a composite linear body obtained by depositing an elemental metal or metal alloy on a surface of a forest, sheets or a bundle of carbon nanotubes, or a spun linear body through a method such as vapor deposition, ion plating, sputtering or wet plating in the process of manufacturing a carbon nanotube linear body obtained by drawing carbon nanotubes from an end of the carbon nanotube forest to form the sheets, bundling the drawn carbon nanotube sheets and then spinning the bundle of the carbon nanotubes; (2) a composite linear body in which a bundle of carbon nanotubes is spun with a linear body of an elemental metal, a linear body of a metal alloy, or a composite linear body; and (3) a composite linear body in which a carbon nanotube linear body or a composite linear body is woven with a linear body of an elemental metal, a linear body of a metal alloy, or a composite linear body. In the composite linear body of (2), metal may be supported on the carbon nanotubes when spinning the bundle of the carbon nanotubes as in the composite linear body of (1). Further, although the composite linear body of (3) is a composite linear body provided by weaving two linear bodies, the composite linear body of (3) may be provided by weaving three or more carbon nanotube linear bodies, linear bodies of an elemental metal, linear bodies of a metal alloy, or composite linear bodies, as long as at least one of a linear body of an elemental metal, a linear body of a metal alloy, or a composite linear body is contained.

Examples of the metal for the composite linear body include elemental metals such as gold, silver, copper, iron, aluminum, nickel, chromium, tin, and zinc and alloys containing at least one of these elemental metals (e.g., a copper-nickel-phosphorus alloy, a copper-iron-phosphorus-zinc alloy).

The conductive linear body 21 may be a linear body in a form of a conductively coated yarn. Examples of the yarn include yarns made from resins, such as nylon and polyester, by spinning. Examples of the conductive coating include coating films of a metal, a conductive polymer, a carbon material, and the like. The conductive coating can be formed by plating, vapor deposition, or the like. The linear body in a form of a conductively coated yarn can be improved in conductivity of the linear body with flexibility of the yarn maintained. In other words, a reduction in resistance of the pseudo sheet structure 2 is facilitated.

Resin Layer

The resin layer 3 is a layer containing a resin. The resin layer 3 can directly or indirectly support the pseudo sheet structure 2. The resin layer 3 is preferably a layer containing an adhesive agent. The conductive linear bodies 21 are easily attached to the resin layer 3 by an adhesive agent when the pseudo sheet structure 2 is formed on the resin layer 3.

The resin layer 3 may be a layer made from a resin capable of being dried or cured. A hardness sufficient for protecting the pseudo sheet structure 2 is thus imparted to the resin layer 3. Accordingly, the resin layer 3 also functions as a protection film. Further, the cured or dried resin layer 3 exhibits impact resistance, so that the wiring sheet 100 can be inhibited from being deformed by impact.

The resin layer 3 is preferably curable with an energy ray such as an ultraviolet ray, visible energy ray, infrared ray, or electron ray in terms of an easy curability in a short time. It should be noted that "curing with an energy ray" includes thermosetting by energy-ray heating.

Examples of the adhesive agent in the resin layer 3 include: a thermosetting adhesive agent that is curable by heat; a so-called heat-seal adhesive agent that is bondable by heat; and an adhesive agent that exhibits stickiness when wetted. However, in terms of easy application, the resin layer 3 is preferably energy-ray-curable. An energy-ray-curable resin is exemplified by a compound having at least one polymerizable double bond in a molecule, preferably an acrylate compound having a (meth)acryloyl group.

Examples of the acrylate compound include: chain aliphatic skeleton-containing (meth)acrylates (e.g., trimethylol propane tri(meth)acrylate, tetramethylol methanetetra(meth)acrylate, pentaerythritol tri(meth)acrylate, pentaerythritol tetra(meth)acrylate, dipentaerythritol monohydroxy penta(meth)acrylate, dipentaerythritol hexa(meth)acrylate, 1,4-butylene glycol di(meth)acrylate, and 1,6-hexanediol di(meth)acrylate); cyclic aliphatic skeleton-containing (meth)acrylates (e.g., dicyclopentanyl di(meth)acrylate and dicyclopentadiene di(meth)acrylate); polyalkylene glycol(meth)acrylates (e.g., polyethyleneglycol di(meth)acrylate); oligoester (meth)acrylate; urethane (meth)acrylate oligomer; epoxy-modified (meth)acrylate; polyether (meth)acrylates other than the above polyalkylene glycol (meth)acrylates; and itaconic acid oligomer.

A weight average molecular weight (Mw) of the energy-ray-curable resin is preferably in a range from 100 to 30,000, more preferably in a range from 300 to 10,000.

Only one kind or two or more kinds of the energy-ray-curable resins may be contained in the adhesive agent composition. In a case where two or more kinds of the energy-ray-curable resins are contained, a combination and ratio of the energy-ray-curable resins can be selected as needed. In addition, the energy-ray-curable resin may be combined with a later-described thermoplastic resin. A combination and ratio of the energy-ray-curable resin and the thermoplastic resin can be determined as needed.

The resin layer 3 may be a sticky agent layer formed from a sticky agent (a pressure-sensitive adhesive agent). The sticky agent in the sticky agent layer is not particularly limited. Examples of the sticky agent include an acrylic sticky agent, a urethane sticky agent, a rubber sticky agent, a polyester sticky agent, a silicone sticky agent, and a polyvinyl ether sticky agent. Among the above, the sticky agent is preferably at least one selected from the group consisting of an acrylic sticky agent, urethane sticky agent, and rubber sticky agent, more preferably an acrylic sticky agent.

Examples of the acrylic sticky agent include a polymer including a constituent unit derived from alkyl (meth)acrylate having a linear alkyl group or a branched alkyl group (i.e., a polymer with at least alkyl (meth)acrylate polymerized) and an acrylic polymer including a constituent unit derived from a (meth)acrylate with a ring structure (i.e., a polymer with at least a (meth)acrylate with a ring structure polymerized). Herein, the "(meth)acrylate" is used as a term referring to both "acrylate" and "methacrylate", and the same applies to other similar terms.

When the acrylic polymer is a copolymer, the form of the copolymerization is not particularly limited. The acrylic copolymer may be any of a block copolymer, a random copolymer, and a graft copolymer.

When the acrylic polymer is a copolymer, the form of the copolymerization is not particularly limited. The acrylic copolymer may be any of a block copolymer, a random copolymer, and a graft copolymer.

The acrylic copolymer may be cross-linked by a cross-linker. Examples of the cross-linker include a known epoxy cross-linker, isocyanate cross-linker, aziridine cross-linker, and metal chelate cross-linker. In cross-linking the acrylic copolymer, a hydroxyl group, a carboxyl group, or the like, which is reactive with the above crosslinkers, can be introduced into the acrylic copolymer as a functional group derived from a monomer component of the acrylic copolymer.

When the resin layer 3 is formed from a sticky agent, the resin layer 3 may further contain the above-described energy-ray-curable resin in addition to the sticky agent. When the acrylic sticky agent is used as the sticky agent, a compound having a functional group reactive with the functional group derived from a monomer component of the acrylic copolymer and an energy-ray polymerizable functional group in one molecule may be used as the energy-ray-curable component. Reaction between the functional group of the compound and the functional group derived from the monomer component of the acrylic copolymer enables a side chain of the acrylic copolymer to be polymerized by energy ray irradiation. When the sticky agent is not an acrylic sticky agent, the polymer component other than the acrylic polymer may be a component whose side chain is energy-ray polymerizable.

The thermosetting resin used in the resin layer 3 is not particularly limited. Specific examples of the thermosetting resin include an epoxy resin, phenol resin, melamine resin, urea resin, polyester resin, urethane resin, acrylic resin, benzoxazine resin, phenoxy resin, amine compound and acid anhydride compound. One of the thermosetting resins may be used alone, or two or more thereof may be used in combination. Among the above examples, in terms of suitability for curing with an imidazole curing catalyst, it is preferable to use an epoxy resin, phenol resin, melamine resin, urea resin, amine compound and acid anhydride compound. Particularly in terms of exhibiting an excellent curability, it is preferable to use an epoxy resin, phenol resin, a mixture thereof, or a mixture of an epoxy resin and at least one selected from the group consisting of a phenol resin, melamine resin, urea resin, amine compound and acid anhydride compound.

A moisture-curable resin used in the resin layer 3 is not particularly limited. Examples of the moisture-curable resin include a urethane resin, which is a resin where an isocyanate group is generated by moisture, and a modified silicone resin.

When the energy-ray-curable resin or the thermosetting resin is used, a photopolymerization initiator, thermal polymerization initiator, or the like is preferably used. A cross-linking structure is formed by using the photopolymerization initiator, thermal polymerization initiator, or the like, making it possible to more firmly protect the pseudo sheet structure 2.

Examples of the photopolymerization initiator include benzophenone, acetophenone, benzoin, benzoinmethylether, benzoinethylether, benzoinisopropylether, benzoinisobutylether, benzoin benzoic acid, benzoin methyl benzoate, benzoin dimethylketal, 2,4-diethyl thioxanthone, 1-hydroxy cyclohexylphenylketone, benzyl diphenyl sulfide, tetramethylthiuram monosulfide, azobisisobutyronitrile, 2-chloroanthraquinone, diphenyl(2,4,6-trimethylbenzoyl)phosphine oxide, and bis(2,4,6-trimethylbenzoyl)-phenylphosphine oxide.

Examples of the thermal polymerization initiator include hydrogen peroxide, peroxydisulfuric acid salts (e.g., ammonium peroxodisulfate, sodium peroxodisulfate, and potassium peroxodisulfate), azo compounds (e.g., 2,2'-azo-bis(2-amidinopropane)dihydrochloride, 4,4'-azobis(4-cyanovaleric acid), 2,2'-azobisiosbutyronitrile, and 2,2'-azobis(4-methoxy-2,4-dimethylvaleronitrile)), and organic peroxides (e.g., benzoyl peroxide, lauroyl peroxide, peracetic acid, persuccinic acid, di-t-butyl peroxide, t-butyl hydroperoxide, and cumene hydroperoxide).

One of the polymerization initiators may be used alone, or two or more thereof may be used in combination.

When the polymerization initiator is used for forming a cross-linking structure, a content of the polymerization initiator is preferably in a range from 0.1 parts by mass to 100 parts by mass, more preferably in a range from 1 part by mass to 100 parts by mass, and still more preferably in a range from 1 part by mass to 10 parts by mass, with respect to 100 parts by mass of the energy-ray-curable resin or the thermosetting resin.

The resin layer 3 is not necessarily a layer made from a curable resin composition, and may be, for instance, a layer formed from a thermoplastic resin composition. A thermoplastic resin layer can be softened by containing a solvent in the thermoplastic resin composition. With this configuration, when forming the pseudo sheet structure 2 on the resin layer 3, attachment of the conductive linear bodies 21 to the resin layer 3 is facilitated. The thermoplastic resin layer can be dried to be solidified by volatilizing the solvent in the thermoplastic resin composition.

Examples of the thermoplastic resin include polyethylene, polypropylene, polyvinyl chloride, polystyrene, polyvinyl acetate, polyurethane, polyether, polyethersulfone, polyimide and acrylic resin.

Examples of the solvent include an alcohol solvent, ketone solvent, ester solvent, ether solvent, hydrocarbon solvent, alkyl halide solvent, and water.

The resin layer 3 may contain an inorganic filler. The resin layer 3 containing the inorganic filler can have a further improved hardness after cured. In addition, the resin layer 3 containing the inorganic filler has an improved heat conductivity.

Examples of the inorganic filler include inorganic powder (e.g., powders of silica, alumina, talc, calcium carbonate, titanium white, colcothar, silicon carbide, and boron nitride), beads of spheroidized inorganic powder, single crystal fiber, and glass fiber. Among the above, a silica filler and an alumina filler are preferable as the inorganic filler. One of the inorganic fillers may be used alone, or two or more thereof may be used in combination.

The resin layer 3 may contain other components. Examples of other components include known additives such as an organic solvent, a flame retardant, a tackifier, an ultraviolet absorber, an antioxidant, a preservative, an antifungal agent, a plasticizer, a defoamer, and a wettability modifier.

A thickness of the resin layer 3 is determined as needed depending on an intended use of the wiring sheet 100. For instance, in view of adhesiveness, the thickness of the resin layer 3 is preferably in a range from 3 $\mu$m to 150 $\mu$m, more

preferably in a range from 5 μm to 100 μm.

Electrodes

The electrodes 4 are used for supplying electric current to the conductive linear bodies 21. The electrodes 4 are formable using a known electrode material. Examples of the electrode material include a conductive paste (e.g., silver paste), metallic foil (e.g., copper foil), and metal wire. The electrodes 4 are disposed in electrical connection on both ends of the conductive linear bodies 21.

Examples of metal of the metallic foil or metal wire include metals such as copper, aluminum, tungsten, iron, molybdenum, nickel, titanium, silver, and gold and alloys containing two or more metals (e.g., steels such as stainless steel and carbon steel, brass, phosphor bronze, zirconium-copper alloy, beryllium copper, iron nickel, Nichrome®, nickel titanium, KANTHAL®, HASTELLOY®, and rhenium tungsten). The metallic foil or metal wire may be plated with tin, zinc, silver, nickel, chromium, nickel-chromium alloy, solder, or the like. Especially, metal containing at least one selected from copper, silver, and an alloy containing copper and/or silver is preferable in view of metal having a low volume resistivity.

The width of electrodes 4 may be larger with increased distance from the first power feeder 51 and the second power feeder 52, as shown in Fig. 1.

In this case, an average width of the electrode 4 is, in a plan view of the pseudo sheet structure 2, preferably 100 mm or less, more preferably 10 mm or less, and still more preferably 100 μm or less. The temperature variation is more likely to occur as the width of the electrode 4 decreases. However, even when the width of the electrode 4 is small, the wiring sheet 100 according to the exemplary embodiment can restrain the temperature variation.

A ratio of resistance values between the electrode 4 and the pseudo sheet structure 2 (i.e., the resistance value of the electrode 4 / the resistance value of the pseudo sheet structure 2) is preferably in a range from 0.0001 to 0.3, and more preferably in a range from 0.0005 to 0.1. The ratio of the resistance values between the electrode and the pseudo sheet structure 2 can be calculated from "the resistance value of the electrode 4/ the resistance value of the pseudo sheet structure 2." At a ratio of the resistance values falling within this range, when the wiring sheet 100 is used as a heat-generating body, abnormal heat generation at the electrodes are restrained. When the pseudo sheet structure 2 is used as a sheet-shaped heater, heat is generated only in the pseudo sheet structure 2, thereby providing a sheet-shaped heater with excellent heat generation efficiency.

The resistance values of the electrode 4 and the pseudo sheet structure 2 can be measured using a tester. First, the resistance value of the electrode 4 is measured and the resistance value of the pseudo sheet structure 2 attached with the electrodes 4 is measured. Subsequently, the respective resistance values of the electrode 4 and the pseudo sheet structure 2 are calculated by subtracting the measurement value of the electrode 4 from the resistance value of the pseudo sheet structure 2 attached with the electrodes.

Power Feeder

The first power feeder 51 and the second power feeder 52 are configured to apply voltage to the wiring sheet 100. When the electrodes 4 are exposed to be electrically connectable, any part of the electrodes 4 may function as the first power feeder 51 or the second power feeder 52.

Alternatively, for the convenience of connection of a power source (not shown) to the electrodes 4, the first power feeder 51 and the second power feeder 52 may be separately provided. In this case, the material for the first power feeder 51 and the second power feeder 52 may be the same as the material for the electrodes 4. Further, when the electrodes 4 are covered with an insulation material for preventing a short circuit and the like, the first power feeder 51 and the second power feeder 52 may be provided by removing a part of the insulation material.

Method for Manufacturing Wiring Sheet

A method for manufacturing the wiring sheet 100 according to the exemplary embodiment is not specifically limited. The wiring sheet 100 can be manufactured, for instance, by a process described below.

First, the base material 1 is coated with a composition for forming the resin layer 3 to form a coating film. Subsequently, the coating film is dried to form the resin layer 3. Then, the conductive linear bodies 21 are arrayed on the resin layer 3 to form the pseudo sheet structure 2. For instance, a drum member is rotated while the resin layer 3 attached with the base material 1 is disposed on an outer circumferential surface of the drum member, and the conductive linear bodies 21 are spirally wound on the resin layer 3 during the rotation of the drum member. After that, a bundle of the conductive linear bodies 21 spirally wound is cut along an axial direction of the drum member, resulting in the pseudo sheet structure 2 arranged on the resin layer 3. The resin layer 3 attached with the base material 1, on which the pseudo sheet structure 2 is formed, is taken off the drum member, thereby obtaining a sheet-shaped conductive member. According to this method, the interval L between adjacent ones of the conductive linear bodies 21 of the pseudo sheet structure 2 is easily adjusted by, for instance, moving a feeder of the conductive linear bodies 21 along a direction parallel with an axis of the drum member while turning the drum member.

Next, the electrodes 4 are attached to respective ends of the conductive linear bodies 21 of the pseudo sheet structure 2 of the sheet-shaped conductive member. Then, the first power feeder 51 and the second power feeder 52 are provided to produce the wiring sheet 100.

Advantages of First Exemplary Embodiment

The following advantages can be achieved by the exemplary embodiment.

(1) According to the exemplary embodiment, by satisfying the conditions represented by the numerical formulae (F2) and (F3), the cross-sectional area of the electrode 4 increases with increased distance from each of the first power feeder 51 and the second power feeder 52. This can inhibit the temperature variation in the wiring sheet 100.

(2) In the exemplary embodiment, the width of the electrode 4 increases with increased distance from each of the first power feeder 51 and the second power feeder 52, so that the cross-sectional area of the electrode 4 can increase with increased distance from each of the first power feeder 51 and the second power feeder 52.

(3) The wiring sheet 100 according to the exemplary embodiment, which can restrain the temperature variation, is suitably usable as a sheet-shaped heater.

Second Exemplary Embodiment

Next, a second exemplary embodiment of the invention will be described below with reference to the attached drawings.

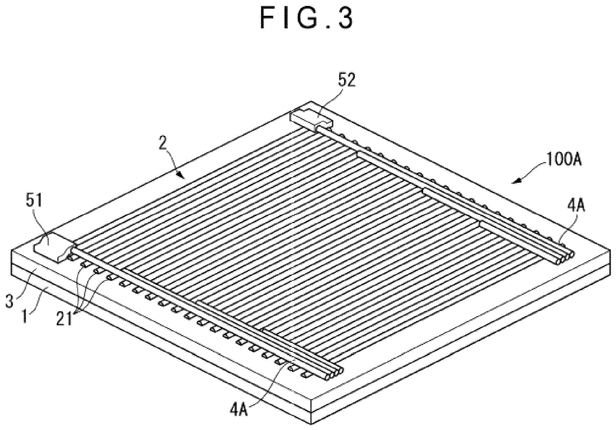

As shown in Fig. 3, a wiring sheet 100A according to the exemplary embodiment includes the base material 1, the pseudo sheet structure 2, the resin layer 3, and a pair of electrodes 4A. The pseudo sheet structure 2 includes a plurality of conductive linear bodies 21 arranged at intervals. The first power feeder 51 is provided on one of the electrodes 4A, and the second power feeder 52 is provided on the other of the electrodes 4A.

It should be noted that the second exemplary embodiment is similar to the first exemplary embodiment except for the electrodes 4A. Thus, description will be focused on the electrodes 4A, and the description common to the first exemplary embodiment will be omitted.

The electrodes 4A of the exemplary embodiment each include a plurality of metal wires, as shown in Fig. 3. The metal wires have different lengths. In the electrodes 4A, the number of the metal wires increases with increased distance from the first power feeder 51 and the second power feeder 52. In each electrode 4A, the metal wires are electrically connected with each other. In this case, an effect of contact resistance between the metal wires is negligible. With this configuration, a cross-sectional area of the electrode 4A can increase with increased distance from each of the first power feeder 51 and the second power feeder 52.

Advantages of Second Exemplary Embodiment

According to the exemplary embodiment, the following advantage (4) can be achieved in addition to the advantages (1) and (3) in the first exemplary embodiment. (4) In the exemplary embodiment, the number of the metal wires forming the electrode 4A increases with increased distance from each of the first power feeder 51 and the second power feeder 52, so that the cross-sectional area of the electrode 4A can increase with increased distance from each of the first power feeder 51 and the second power feeder 52.

Modifications of Exemplary Embodiment(s)

The scope of the invention is not limited to the above exemplary embodiments, and modifications, improvements, etc. are included within the scope of the invention as long as they are compatible with an object of the invention.

For instance, the wiring sheet 100 includes the base material 1 in the above exemplary embodiment. The invention, however, is not limited thereto. As an example, the wiring sheet 100 may not include the base material 1. In such a case, the wiring sheet 100 is usable by being attached to an adherend through the resin layer 3.

The wiring sheet 100 includes the resin layer 3 in the above exemplary embodiment. The invention, however, is not limited thereto. As an example, the wiring sheet 100 may not include the resin layer 3. In such a case, a knitted fabric may be used as the base material 1 and the pseudo sheet structure 2 may be formed by weaving the conductive linear bodies 21 into the base material 1.

Confirmation of Advantages

Power consumption distribution was analyzed as described below in order to confirm that the exemplary embodiment provided a wiring sheet capable of restraining the temperature variation.

In analyzing the power consumption distribution, the wiring sheet according to the exemplary embodiment was applied to a ladder-shaped circuit diagram for analysis of the power consumption distribution in the circuit.

In Example 1, the number N of the conductive linear bodies 21 was 30, the resistance value r of each conductive linear body 21 was 25,070 [m$\Omega$], the resistance value R of each electrode 4 was 148 [m$\Omega$], the resistance value $R_2$ of the electrode 4 between the second conductive linear body 21 and the first conductive linear body 21 counted from the side at which the first power feeder 51 and the second power feeder 52 were provided was 10.21 [m$\Omega$], and the resistance value $R_{30}$ of the electrode 4 between the 30th conductive linear body 21 and the 29th conductive linear body 21 counted from the side at which the first power feeder 51 and the second power feeder 52 were provided was 0 [m$\Omega$]. It should be noted that the values $R_3$ to $R_{29}$ ([m$\Omega$]) were gradually decreased from the value $R_2$ to the value $R_{30}$ at a constant change rate (approximately 0.36 [m$\Omega$] between adjacent conductive linear bodies on the electrodes).

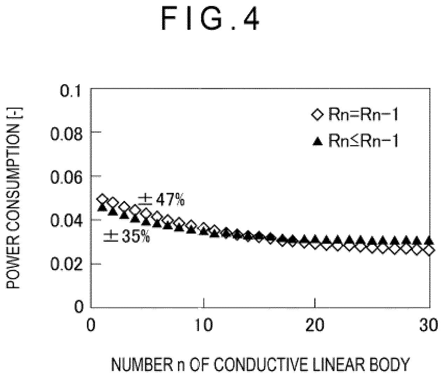

Power consumption distribution from the first conductive linear body 21 to the 30th conductive linear body 21 when electric current was applied to the above circuit was analyzed. It should be noted that each conductive linear body 21 was numbered and the n-th conductive linear body 21 was numbered n. Fig. 4 shows the obtained results. It should be noted that power consumption is a relative value assuming that an electric current of a power source is defined as 1.

In Example 2, the power consumption distribution was analyzed in the same manner as in Example 1 except that the values $R_2$ to $R_{30}$ were not changed. It should be noted that the values $R_2$ to $R_{30}$ are each 10.21 [m$\Omega$]. Fig. 4 shows the obtained results.

In addition, maximum power consumption, minimum power consumption and average power consumption were determined from the obtained power consumption distribution to calculate an electric power variation (unit: $\pm$%) using a formula below.

(Electric power variation) = [{(Maximum power consumption) - (Minimum power consumption)}/(Average power consumption)/2] $\times$ 100

It has been found that Example 1 has an electric power variation of $\pm$35%, which is lower than $\pm$47% in Example 2. Presumably, the smaller the electric power variation is, the more temperature variation is restrained.

EXPLANATION OF CODE(S)

1...base material, 2... pseudo sheet structure, 21... conductive linear body, 3... resin layer, 4, 4A... electrode, 51 ... first power feeder, 52... second power feeder, 100, 100A... wiring sheet

**Claims**

1. A wiring sheet (100, 100A) comprising:

    a pseudo sheet structure (2) comprising a plurality of conductive linear bodies (21) arranged at intervals;
    a pair of electrodes (4, 4A); and
    a first power feeder (51) provided for one of the electrodes (4, 4A) and a second power feeder (52) provided for the other of the electrodes (4, 4A),
    **characterized in that**;
    provided that the number of the conductive linear bodies (21) is N, a resistance value of each of the conductive linear bodies (21) is r, a resistance value of each of the electrodes (4, 4A) is R, a resistance value of each of the electrodes (4, 4A) between an n-th conductive linear body (21) and an (n-1)th conductive linear body (21) counted from a side at which the first power feeder (51) and the second power feeder (52) are provided is $R_n$, the wiring sheet satisfies all conditions represented by numerical formulae (F1), (F2) and (F3) below,

$$r/R \leq 300 \qquad (F1)$$

$$R_n \leq R_{n-1} \qquad (F2)$$

where n is an integer of 2 or more,

$$0 < R_2 - R_N \qquad (F3)$$

where N is an integer of 3 or more.

2. The wiring sheet (100, 100A) according to claim 1, wherein an interval between the conductive linear bodies (21) is 20 mm or less.

3. The wiring sheet (100, 100A) according to claim 1 or 2, further comprising a base material (1) supporting the pseudo sheet structure.

4. A sheet-shaped heater comprising the wiring sheet (100, 100A) according to any one of claims 1 to 3.

**Patentansprüche**

1. Eine Verdrahtungsplatte (100, 100A), umfassend:

eine Pseudoblattstruktur (2) mit einer Vielzahl von in Abständen angeordneten leitfähigen linearen Körpern (21);
ein Paar Elektroden (4, 4A); und
eine erste Stromzuführung (51) für eine der Elektroden (4, 4A) und eine zweite Stromzuführung (52) für die andere der Elektroden (4, 4A),
**dadurch gekennzeichnet, dass**
unter der Voraussetzung, dass die Anzahl der leitfähigen linearen Körper (21) N beträgt, der Widerstandswert jedes der leitfähigen linearen Körper (21) r beträgt und der Widerstandswert jeder der Elektroden (4, 4A) R beträgt, ein Widerstandswert $R_n$ jeder der Elektroden (4, 4A) zwischen einem n-ten leitfähigen linearen Körper (21) und einem (n-1)-ten leitfähigen linearen Körper (21), gezählt von einer Seite, an der die erste Stromzuführung (51) und die zweite Stromzuführung (52) vorgesehen ist, die Verdrahtungsplatte alle Bedingungen, die durch die folgenden numerischen Formeln (F1), (F2) und (F3) dargestellt werden, erfüllt

$$r/R \leq 300 \qquad (F1)$$

$$R_n \leq R_{n-1} \qquad (F2)$$

wobei n eine ganze Zahl von 2 oder mehr ist,

$$0 < R_2 - R_N \qquad (F3)$$

wobei N eine ganze Zahl von 3 oder mehr ist.

2. Verdrahtungsblatt (100, 100A) gemäß Anspruch 1, wobei ein Abstand zwischen den leitfähigen linearen Körpern (21) 20 mm oder weniger beträgt.

3. Verdrahtungsblatt (100, 100A) nach Anspruch 1 oder 2, das ferner ein Basismaterial (1) umfasst, das die Pseudoblattstruktur trägt.

4. Eine blattförmige Heizvorrichtung, die das Verdrahtungsblatt (100, 100A) gemäß einem der Ansprüche 1 bis 3 umfasst.

**Revendications**

1. Une feuille de câblage (100, 100A) comprenant :

une structure pseudo-feuille (2) comprenant une pluralité de corps linéaires conducteurs (21) disposés à intervalles ;

une paire d'électrodes (4, 4A) ; et

un premier alimentateur électrique (51) prévu pour l'une des électrodes (4, 4A), et un deuxième alimentateur électrique (52) prévu pour l'autre des électrodes (4, 4A),

**caractérisée en ce que** ;

à condition que le nombre de corps linéaires conducteurs (21) est N, une valeur de résistance pour chacun des corps linéaires conducteurs (21) est r, une valeur de résistance pour chacune des électrodes (4, 4A) est R, une valeur de résistance pour chacune des électrodes (4, 4A) entre un n-ième corps linéaire conducteur (21) et un (n-1)ème corps linéaire conducteur (21) compté d'un côté où le premier alimentateur électrique (51) et le deuxième alimentateur électrique (52) sont prévus est $R_n$, la feuille de câblage satisfait toutes les conditions représentées par les formules numériques (F1), (F2) et (F3) ci-dessous,

$$r/R \leq 300 \qquad (F1)$$

$$R_n \leq R_{n-1} \qquad (F2)$$

où n est un entier de 2 ou plus,

$$0 < R_2 - R_N \qquad (F3)$$

où N est un entier de 3 ou plus.

2. La feuille de câblage (100, 100A) selon la revendication 1, dans laquelle un intervalle entre les corps linéaires conducteurs (21) est de 20 mm ou moins.

3. La feuille de câblage (100, 100A) selon la revendication 1 ou 2, comprenant en outre un matériau de base (1) supportant la structure pseudo-feuille.

4. Un chauffage en forme de feuille comprenant la feuille de câblage (100, 100A) selon l'une quelconque des revendications 1 à 3.

# FIG.1

# FIG.2

# F I G . 3

# FIG.4

**EP 4 247 116 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017086395 A
- EP 3378640 A1
- GB 2061680 A
- US 20130251619
- JP 2012126635 A